(19) Europäisches Patentamt
European Patent Office
Office européen des brevets

(11) Publication number: **0 080 889**
**A1**

# (12) EUROPEAN PATENT APPLICATION

(21) Application number: 82306345.8

(22) Date of filing: 29.11.82

(51) Int. Cl.³: A 01 N 57/18
C 07 F 9/40, C 07 F 9/38

(30) Priority: 01.12.81 US 326220

(43) Date of publication of application: 08.06.83 Bulletin 83/23

(84) Designated Contracting States: AT BE CH DE FR GB IT LI LU NL SE

(71) Applicant: PHILIP A. HUNT CHEMICAL CORP.
Palisades Park New Jersey 07650(US)

(72) Inventor: Campbell, Roderick A.
247 Milton Road
Warwick Rhode Island 02888(US)

(72) Inventor: Ebersole, Charles E.
15 Hazard Avenue, Apt. 3
East Providence Rhode Island 02914(US)

(74) Representative: Bannerman, David Gardner et al,
Withers & Rogers 4 Dyer's Buildings Holborn
London, EC1N 2JT(GB)

## (54) Herbicidal compositions containing and method using phosphonoalkanoic acids, esters and salts thereof.

(57) The present invention relates to herbicidal compositions and a herbicidal method which include or use a compound of the formula:

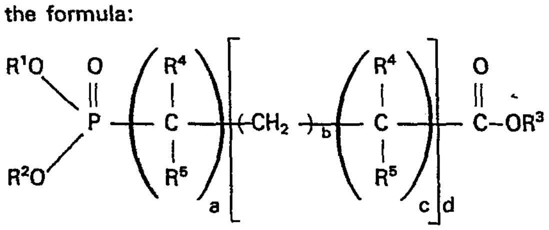

(I)

wherein $R^1$, $R^2$ and $R^3$ are each selected independently from H, lower alkyl, substituted lower alkyl, aryl, substituted aryl, ammonium, mono-, di- and tri- lower alkylammonium, arylammonium, alkali metal and alkaline earth metal cations; and for each $\geq CR^4R^5$ group, $R^4$ is selected independently from H, lower alkyl, substituted lower alkyl, aryl, substituted aryl, halogen, mono-, and di- lower alkylamino, amino, lower alkoxy, and hydroxy, and $R^5$ is H, or $R^5$ is selected independently from H, lower alkyl, substituted lower alkyl and halogen, when $R^4$ is lower alkyl, substituted lower alkyl or halogen; and a, b, c, and d are each selected independently from 0, 1, 2, 3, 4, 5, 6 and 7, provided that: $1 \leq a + d(b + c) \leq 7$.

EP 0 080 889 A1

# HERBICIDAL COMPOSITIONS CONTAINING AND METHOD USING PHOSPHONOALKANOIC ACIDS, ESTERS AND SALTS THEREOF

## Field Of The Invention

This invention relates to herbicidal compositions containing phosphonoalkanoic acids, esters and salts thereof and to their use as herbicides for the treatment of undesirable plants.

## Description Of The Invention

It has been discovered that certain phosphonoalkanoic acids as well as esters and salts thereof can be employed as herbicides for the treatment of undesired plants. The herbicidal compositions and method of the present invention include or use a compound of the formula:

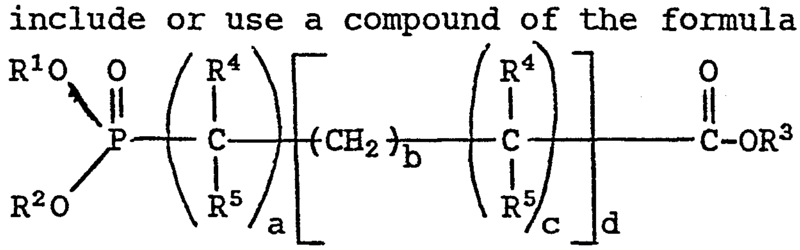

(I)

wherein $R^1$, $R^2$ and $R^3$ are each selected independently from H, lower alkyl, substituted lower alkyl, aryl, substituted aryl, ammonium, mono-, di- and tri- lower alkylammonium, arylammonium, alkali metal and alkaline earth metal cations; and for each $>CR^4R^5$ group, $R^4$ is selected independently from H, lower alkyl, substituted lower alkyl, aryl, substituted aryl, halogen, mono-, and di- lower alkylamino, amino, lower alkoxy, and hydroxy, and $R^5$ is H, or $R^5$ is selected independently from H, lower alkyl, substituted lower alkyl and halogen, when $R^4$ is lower alkyl, substituted lower alkyl or halogen; and a, b, c, and d are each selected independently from 0, 1, 2, 3, 4, 5, 6 and 7, provided that: $1 \leq a + d(b + c) \leq 7$. Preferably: $1 \leq a + d(b + c) \leq 4$. As employed herein, "lower", whether used as lower alkyl or lower alkoxy, designates saturated hydrocarbon radicals

having 1 to 6 carbon atoms in a straight or branched chain.

Preferred compounds for use in the composition and method of the present invention are those compounds of formula I wherein $R^1$, $R^2$ and $R^3$ are selected independently from H, methyl, ethyl, phenyl, t-butyl, isopropyl, ammonium, isopropylammonium, methylammonium, ethylammonium, Na and K. Also preferred are compounds of formula I wherein $R^4$ is selected from H, lower alkyl, lower alkoxy, hydroxy, amino, halogen or lower alkylamino. Particularly preferred are those compounds of formula I wherein d = 0 and a=1 since certain of these compounds have been observed to possess herbicidal activity and yet to be non-injurious to corn, and, of these compounds, preferred are those wherein $R^4$ is H, methyl or fluorine and $R^5$ is H or fluorine.

Among the preferred salts are those of compound I wherein $R^1$ and at least one of $R^2$ and $R^3$ is isopropylammonium. The ammonium and the mono-, di- and tri- lower alkylammonium salts are particularly preferred for use in the herbicidal compositions and method of the present invention since they are believed to more readily penetrate the waxy leaf cuticle and thus to more readily enter the plant. The aforementioned isopropylammonium salt is preferably prepared by adding isopropylamine to an aqueous solution of a compound of formula I ($R^1=R^2=R^3=H$) to a pH of about 7. Among the preferred esters are those compounds of formula I wherein $R^3$ is H or lower alkyl and $R^1$ and $R^2$ are aryl. Further preferred compounds are those of formula I wherein $R^1=R^2=R^3=H$ or $R^1=R^2=R^3=R^4=R^5=H$.

Methods of preparing compounds of formula I are well known and can be found, for example, in the following publications. P. Nylen, Chem. Ber., 59, 1119-1135 (1926); P. Nylen, Chem. Ber., 57, 1023-1039 (1924); and J. Falbe et al., Chem. Ber., 98, 2312-2316 (1965). The compounds of formula I are readily prepared from commercially available compounds.

The following examples serve to illustrate the preparation of specific individual compounds useful in

the present invention as well as to illustrate specific herbicidal compositions of and the practice of the herbicidal method of the present invention.

Example 1

86g (1.00 mole) of butyrolactone were dissolved in 120 ml of methanol (3.00 moles) in a suitable reaction vessel and the solution cooled to 0° to 5°C. while stirring. Anhydrous HBr was then bubbled through the solution until one hour after the HBr was detected escaping the reaction vessel. Once the HBr addition was complete, the mixture was maintained at 0° to 5°C for 20 hours and then poured into ice cold water (500 ml). The organic bottom layer was separated from the aqueous layer and saved. The aqueous layer was extracted twice with 50 ml portions of ethyl bromide. The organic phases were combined and then extracted with an ice cold 2% KOH solution (100 ml), then with very dilute HCl (100 ml) and finally with $H_2O$ (100 ml). The organic phase was dried over magnesium sulfate, filtered and the solvent stripped in a rotoevaporator. The crude product was distilled under aspirator vacuum. BP: 87°C at 20 mm; literature: 187°C at 760 mm. 151.27g of methyl-4-bromobutyrate; yield: 83.6%.

Example 2

54.0g (0.299 mole) of the methyl-4-bromobutyrate prepared in Example 1 were heated to 100°C under a nitrogen atmosphere in a 250 ml 3-necked flask and 49.6g (0.299 mole) of triethylphosphite were then added dropwise over a total addition time of about 30 minutes while the temperature was increased to about 160°C. Heating was continued, with evolution of ethyl bromide, to about 185°C for 60 minutes and the reaction mixture then fractionally distilled under full vacuum. Fraction collected: BP: 105°C to 108°C at 0.1 mm; 43.0g of methyl-4-diethylphosphonobutyrate (theoretical: 71.0g); yield: 60.1%. NMR ($CDCl_3$): 1.31δ, t, 6H, J=7Hz; 2.7-1.4δ, mult., 6H; 3.65δ, S, 3H; 4.18δ, qt., 4H, J=7Hz.

Example 3

40.6g (0.171 mole) of the methyl-4-diethylphosphonobutyrate prepared in Example 2 were dissolved in 100 ml of concentrated HCl in a suitable reaction vessel and refluxed for about 48 hours. The resultant mixture was stripped on a rotoevaporator producing an oil which solidified. The material was again dissolved in 100 ml of concentrated HCl, refluxed for an additional 24 hours and stripped on a rotoevaporator producing an oil which solidified over several days. MP: 120° to 123°C. 27.3 g of 4-phosphonobutyric acid; theoretical: 28.7g; yield: 95%. NMR($D_2O$): 2.3-1.4δ, mult., 4H; 2.50, t, 2H, J=7Hz.

Example 4

An aqueous herbicidal concentrate was prepared by adding to 20g of the 4-phosphonobutyric acid prepared in Example 3, 50g of distilled water then isopropylamine to a pH of about 7 and then diluting to 100g total weight with distilled water.

Example 5

34.1g (0.250 mole) of methyl-4-chlorobutyrate were admixed with 41.5g (0.250 mole) of triethylphosphite in a suitable reaction vessel and heated to about 170°C. Heating was continued until the temperature of the reaction mixture reached about 195°C, which required 72 hours of heating. The reaction mixture was then fractionally distilled under pump vacuum. Fraction collected: BP: 104° to 106°C at 0.3 mm; 32.3g of methyl-4-diethylphosphonobutyrate; theoretical: 59.5g; yield: 54.29%. NMR ($CDCl_3$): 1.31δ, t, 6H, J=7Hz; 2.7-1.4δ, mult., 6H; 3.65δ, s, 3H; 4.18δ, qt. 4H, J=7Hz.

Example 6

An aqueous herbicidal concentrate was prepared by admixing 20g of the methyl-4-diethylphosphonobutyrate prepared in Example 5 with 0.5g of Triton AG-98, a nonionic surfactant formulation containing a silicone defoamer which

is manufactured by Rohm and Haas, and then diluting to 100g total weight with distilled water.

Example 7

152.0g (0.840 mole) of ethyl-3-bromopropionate were admixed with 139.4g (0.840 mole) of triethylphosphite in a suitable reaction vessel and heated to reflux under a nitrogen atmosphere. The reaction temperature slowly rose over a period of two hours from about 120°C to about 190°C at which point the reaction was stopped. The reaction vessel was then equipped with a fractional distillation head and the material distilled under aspirator vacuum. Fraction collected: BP: 163° to 165°C at 18 mm; 103.4g.

The material from the collected fraction exhibited a complex NMR that indicated a mixture although the IR spectrum was fairly clear. Gas chomatography at 150°C indicated a mixture of five components. At a higher column temperature, about 240°C, four components were indicated.

The collected fraction was then distilled under pump vacuum. Fraction collected: BP 93° to 95°C at 0.15 mm. 97.0g of ethyl-3-diethylphosphonopropionate; theoretical: 200g; yield: 48.5% (estimated purity, about 95%). NMR ($CDCl_3$): 1.21δ, t, 3H, J=7Hz; 1.28δ, t, 6H, J=7Hz; 1.7-2.8δ, mult., 4H; 4.08δ, qt., 6H, J=7Hz.

Example 8

An aqueous herbicidal concentrate was prepared by admixing 20.0g of the ethyl-3-diethylphosphonopropionate prepared in Example 7 with 0.5g of Triton AG-98, and then diluting to 100g total weight with distilled water.

Example 9

40.0g (0.204 mole) of the ethyl-3-diethylphosphonopropionate prepared in Example 7 were admixed with 50 ml of concentrated HCl and heated to and maintained at reflux for about 48 hours. The HCl was then distilled off until the temperature of the reaction mixture reached about 121°C. About 100 ml of $H_2O$ were added to the reaction

vessel and then distilled until the temperature of the reaction mixture reached about 123°C. The reaction vessel was then cooled and the product crystallized. The crystals were dried in a vacuum oven at about 80°C. 25.8g of 3-phosphonopropionic acid; theoretical: 31.4g; yield: 82.2%; MP: 165° to 166°C. NMR ($D_2O$): 2.9-1.7δ, mult., 4H.

Example 10

An aqueous herbicidal concentrate was prepared by adding to 20.0g of the 3-phosphonopropionic acid prepared in Example 9, 50g of distilled water, then isopropylamine to a pH of 7 and then diluting to 100g with distilled water.

Example 11

111.9g (0.670 mole) of ethyl-2-bromoacetate were heated to reflux in a suitable reaction vessel under a nitrogen atmosphere while stirring. 111.6g (0.670 mole) of triethylphosphite were then slowly added over a period of about 30 minutes and heating was then continued until the temperature of the reaction mixture reached about 190°C., which took about 30 minutes. The reaction mixture was then cooled, the reaction vessel equipped for fractional distillation, and the reaction mixture fractionally distilled under pump vacuum. Fraction collected: BP: 89° to 96°C at 0.15 mm. 133.08g of ethyl-2-diethylphosphonoacetate; theoretical: 150g; yield: 88.7%. NMR ($CDCl_3$): 1.26δ, t, 3H, J=7Hz; 1.30δ, t, 6H, J=7Hz; 2.95δ, d, 2H, J=22Hz; 3.9-4.58δ, mult., 6H.

Example 12

An aqueous herbicidal concentrate was prepared by admixing 20.0g of the ethyl-2-diethylphosphonoacetate prepared in Example 11 with 0.5g of Triton AG-98 and then diluting to 100g total weight with distilled water.

Example 13

58.2g (0.260 mole) of the ethyl-2-diethylphosphonoacetate prepared in Example 11 were dissolved in 50 ml of concentrated HCl and heated to reflux in a suitable reaction vessel. After refluxing for about 48 hours, the solvent was distilled until the temperature of the reaction mixture reached about 122°C. 50 ml of $H_2O$ were then added and the solvent distilled until the reaction temperature reached about 126°C. The reaction vessel was then cooled and the product crystallized. 33.6g of phosphonoacetic acid; theoretical: 36.4g; yield: 92.3%; MP: 129°C. NMR ($D_2O$): 3.16δ, d, 2H, J=22Hz.

Example 14

An aqueous herbicidal concentrate was prepared by adding to 20.0g of the phosphonoacetic acid prepared in Example 13, 50g of distilled water, then 17.1g of isopropylamine and 0.5g of Triton AG-98 and then diluting to 100g total weight with distilled water.

Example 15

90.5g (0.500 mole) of ethyl-2-bromopropionate were heated to about 110°C under a nitrogen atmosphere and 104.0g (0.500 mole) of tri-isopropylphosphite were slowly added thereto over a period of about 60 minutes. During this period, the temperature of the reaction mixture ranged from about 130°C to about 150°C. (The isopropylbromide produced during the reaction (about 30 ml) was collected using a condenser.) Heating was continued until the temperature of the reaction mixture reached about 200°C (about 60 minutes) and the reaction mixture was then distilled under pump vacuum. Fraction collected: 101.6g of ethyl 2-methyl,2-(diisopropylphosphono)-acetate; theoretical: 113g; yield: 76.4%; BP: 93°-96°C at 0.4 mm. NMR ($CDCl_3$): 1.35δ,d, 6H, J=7Hz; 1.45δ, d of d, 3H, J=7Hz, J=18Hz; 3.4-2.6δ, mult., 1H, 4.20δ, qt., 2H, J=7Hz; 4.65δ, mult., 2H.

Example 16

71.6g (0.269 mole) of the ethyl 2-methyl,2-(diisopropylphosphono)-acetate prepared in Example 15 were admixed with 125 ml of 20% HCl (aqueous), then heated to and maintained at reflux for about 42 hours. The aqueous HCl was then stripped to a reaction mixture temperature of about 130°C and cooled. The residual oil solidified after standing for several days. 32.8g of 2-methyl-2-phosphonoacetic acid (theoretical 41.5g); yield: 79.0%. NMR($D_2O$): 1.37δ, d of d, 3H, J=18Hz, J=7Hz; 3.6-2.8δ, mult., 1H.

Example 17

An aqueous herbicidal concentrate was prepared by adding to 20.0g of the 2-methyl-2-phosphonoacetic acid prepared in Example 16, 50g of distilled water then 14.6g of isopropylamine (resulting in a pH of 7), then 0.5g of Triton AG-98 and then diluting to 100g total weight with distilled water.

Examples 18-23

The herbicidal activity of various of the compounds useful in the compositions and method of the present invention was demonstrated as follows.

Wooden flats 1 ft x 2 ft x 0.3 ft deep were filled with a soil mixture consisting of a sandy loam soil and peat in a ratio of 2:1 containing 8-8-8 fertilizer at 400 lb/ Acre and limestone at 4 Ton/Acre. The following crop and weed species were seeded in evenly spaced rows: Alfalfa, oat, tomato, barley, soybean, wheat, cotton, rice, peanut, field corn, cucumber, hemp sesbania, pigweed, yellow foxtail, lambsquarters, large crabgrass, jimsonweed, Johnsongrass, prickly sida, sicklepod, goosegrass, morningglory, barnyardgrass, and cocklebur.

Sample herbicide formulations, including comparative formulations, were applied to one-half of the flats at planting in 1 liter of water (soil drench treatment). The formulations were applied again three weeks after planting (2 to 4 leaf stage) in 10 ml of water using a

small hand sprayer. Samples A and B were applied at the rate of 15 pounds of active ingredient per acre. Samples C and D were proprietary formulations and were applied at the rate of 4 pounds of active ingredient per acre. The plants were watered and observed daily.

The results are summarized below in Tables 1 through 6.

Table 1

Effects of foliar applied sample formulations on plant growth at 4 and 6 days after treatment

| Sample | Time after treatment (days) | Observations |
|---|---|---|
| Control ($H_2O$) | 4 | no effects |
| A[1] | 4 | necrosis on leaf margins of cucumber; soybean and cocklebur were chlorotic; tomato and morningglory growth inhibited by 25%; cocklebur inhibited by 50% |
| B[2] | 4 | plant growth stimulated |
| C[3] | 4 | alfalfa, cucumber, hemp sesbania, lambsquarters, pickly sida, sicklepod, morningglory, and cocklebur were all dead; barnyard-grass nearly dead |
| Control ($H_2O$) | 6 | no effects |
| A[1] | 6 | chlorosis of leaves of soybean, cucumber, peanut, jimsonweed, sicklepod, morningglory, and cocklebur |
| B[2] | 6 | downward cupping of cucumber leaves |
| C[3] | 6 | all plants dead or dying |

---

[1] Active ingredient: Isopropylammonium salt of 4-phosphonobutyric acid. pH=7.

[2] Active ingredient: Isopropylammonium salt of N-carboxymethyl-N[1]-phosphono-methyl-3-ketopiperazine (comparative). pH=7.

[3] Roundup, a proprietary formulation manufactured by Monsanto Company. Active ingredient: Glyphosate. (Comparative).

Table 2

Crop injury or weed control ratings at 7 days after treatment with foliar applied sample formulations

| Species | Sample Formulation[1] A | B | C |
|---|---|---|---|
| | (% of Control) | | |
| Alfalfa | 0 | 0 | 90 |
| Oat | 0 | 0 | 100 |
| Tomato | 70 | 0 | 70 |
| Barley | 0 | 0 | 80 |
| Soybean | 10[2] | 0 | 80 |
| Wheat | 0 | 30 | 50 |
| Cotton | 0 | 10 | 50 |
| Rice | 0 | 10 | 50 |
| Peanut | 10[2] | 0 | 70 |
| Corn | 0 | 0 | 100 |
| Cucumber | 10[2] | 40 | 100 |
| Hemp sesbania | 0 | 0 | 100 |
| Foxtail | 0 | 30 | 100 |
| Lambsquarters | 0 | - | 100 |
| Crabgrass | 0 | 0 | 95 |
| Jimsonweed | 80[2] | 25 | 100 |
| Johnsongrass | 0 | 0 | 100 |
| Prickly sida | 50 | 0 | 100 |
| Sicklepod | 20[2] | 0 | 100 |
| Goosegrass | 25 | 20 | 95 |
| Morningglory | 70[2] | 20 | 95 |
| Barnyardgrass | 0 | 0 | 90 |
| Cocklebur | 90[2] | - | 100 |

1 Sample formulations A, B and C were as defined in Table 1.

2 Chlorotic.

Table 3

Crop injury or weed control ratings at 14 days after treatment with foliar applied samples formulations

| Species | Sample Formulation [1] A | B | C |
|---|---|---|---|
| | (% of Control) | | |
| Alfalfa | 0 | 30 | 100 |
| Oat | 0 | 0 | 100 |
| Tomato | 50 | 10 | 100 |
| Barley | 0 | 10 | 100 |
| Soybean | 0 | 0 | 100 |
| Wheat | 0 | 20 | 100 |
| Cotton | 0 | 0 | 100 |
| Rice | 0 | 0 | 95 |
| Peanut | 0 | 0 | 100 |
| Corn | 0 | 0 | 100 |
| Cucumber | 0 | 10 | 100 |
| Hemp sesbania | 0 | 0 | 100 |
| Foxtail | 0 | 0 | 100 |
| Lambsquarters | 0 | - | 100 |
| Crabgrass | 0 | 0 | 100 |
| Jimsonweed | 80[2] | 0 | 100 |
| Johnsongrass | 0 | 0 | 100 |
| Prickly sida | 0 | 0 | 100 |
| Sicklepod | 10[2] | 0 | 100 |
| Goosegrass | 50 | 20 | 100 |
| Morningglory | 25[2] | 40 | 100 |
| Barnyardgrass | 0 | 0 | 100 |
| Cocklebur | 80[2] | - | 100 |

1 Sample formulations A, B and C were as defined in Table 1.

2 Chlorotic.

## Table 4

Crop injury or weed control ratings at 21 days after treatment with foliar applied sample formulations

| Species | Sample Formulation [1] A | B | C |
|---|---|---|---|
| | (% of Control) | | |
| Alfalfa | 0 | 30 | 100 |
| Oat | 0 | 0 | 100 |
| Tomato | 30 | 50 | 100 |
| Barley | 0 | 0 | 100 |
| Soybean | 0 | 0 | 100 |
| Wheat | 0 | 0 | 100 |
| Cotton | 0 | 0 | 100 |
| Rice | 0 | 0 | 100 |
| Peanut | 0 | 0 | 100 |
| Corn | 0 | 0 | 100 |
| Cucumber | 0 | 0 | 100 |
| Hemp sesbania | 0 | 0 | 100 |
| Foxtail | 0 | 0 | 100 |
| Lambsquarters | 0 | 0 | 100 |
| Crabgrass | 0 | 0 | 100 |
| Jimsonweed | 90[3] | 20 | 100 |
| Johnsongrass | 0 | 0 | 100 |
| Prickly sida | 0 | 0 | 100 |
| Sicklepod | 10 | 0 | 100 |
| Goosegrass | 30[3] | 0 | 100 |
| Morningglory | 20 | 0 | 100 |
| Barnyardgrass | 0 | 0 | 100 |
| Cocklebur | 80[2] | - | 100 |

[1] Sample formulations A, B and C were as defined in Table 1.

[2] Marginal necrosis.

[3] Chlorotic.

Table 5

Crop injury or weed control ratings at 14 days after treatment with soil applied sample formulations

| Species | Sample Formulation [1] A | B | D[2] |
|---|---|---|---|
| | (% of Control) | | |
| Alfalfa | 0 | 0 | 70 |
| Oat | 0 | 0 | 100 |
| Tomato | 50 | 0 | 50 |
| Barley | 0 | 0 | 100 |
| Soybean | 0 | 0 | 0 |
| Wheat | 0 | 0 | 100 |
| Cotton | 0 | 0 | 40 |
| Rice | 0 | 0 | 100 |
| Peanut | 0 | 0 | 0 |
| Corn | 0 | 0 | 0 |
| Cucumber | 0 | 0 | 100 |
| Hemp sesbania | 0 | 0 | 90 |
| Foxtail | 0 | 20 | 100 |
| Lambsquarters | 20 | 0 | 100 |
| Crabgrass | 0 | 20 | 100 |
| Jimsonweed | 90 | 0 | 20 |
| Johnsongrass | 0 | 20 | 100 |
| Prickly sida | 0 | 0 | 30 |
| Sicklepod | 0 | 0 | 70 |
| Goosegrass | 50 | 0 | 100 |
| Morningglory | 10 | 0 | 100 |
| Barnyardgrass | 0 | 0 | 100 |
| Cocklebur | 80 | 20 | 0 |

1 Sample formulations A, B and C were as defined in Table 1.

2 Lasso, a proprietary formulation manufactured by Monsanto Company. Active ingredient is:

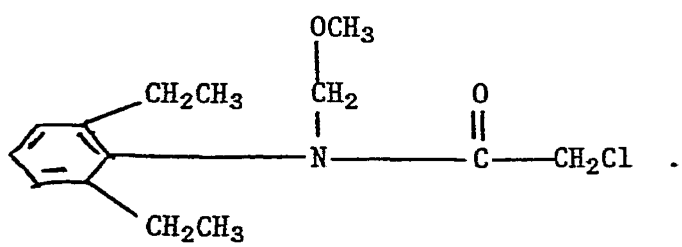

(Comparative).

Table 6

Crop injury or weed control ratings at 24 days after treatment with soil applied sample formulations

| Species | Sample Formulation [1] A | B | D |
|---|---|---|---|
| | (% of Control) | | |
| Alfalfa | 0 | 0 | 100 |
| Oat | 0 | 0 | 100 |
| Tomato | 70 | 0 | 100 |
| Barley | 0 | 0 | 100 |
| Soybean | 0 | 0 | 0 |
| Wheat | 0 | 0 | 100 |
| Cotton | 0 | 0 | 60 |
| Rice | 0 | 0 | 100 |
| Peanut | 0 | 0 | 0 |
| Corn | 0 | 0 | 0 |
| Cucumber | 0 | 0 | 100 |
| Hemp sesbania | 0 | 0 | 90 |
| Foxtail | 0 | 0 | 100 |
| Lambsquarters | 0 | 0 | 100 |
| Crabgrass | 0 | 0 | 100 |
| Jimsonweed | 90 | 0 | 90 |
| Johnsongrass | 0 | 0 | 100 |
| Prickly sida | 0 | 0 | 90 |
| Sicklepod | 0 | 0 | 80 |
| Goosegrass | 75 | 0 | 100 |
| Morningglory | 10 | 0 | 90 |
| Barnyardgrass | 0 | 0 | 100 |
| Cocklebur | 80 | 20 | 80 |

[1] Sample formulations A and B were as defined in Table 1; sample formulation D was as defined in Table 5.

In the post emergence applications, it was observed that the spray droplets of the sample herbicide formulation A, which contained only water and active ingredient, did not adhere very well to the plant foliage whereas the proprietary formulations C and D which contained, in addition to water and active ingredient, various adjuvants did adhere well to the plant foliage. It is believed by those skilled in the art that the addition of adjuvants can account for up to a five-fold increase in observed herbicidal activity.

Examples 24 through 29

Wooden flats 1 ft x 2 ft x 0.3 ft deep were filled with a soil mixture consisting of a Wedowee loamy sand soil (Typic hapludult; clayey, kaolinitic, thermic) and peat in a ratio of 2:1 containing 8-8-8 fertilizer at 400 lb/Acre and dolomitic limestone at 4 Ton/Acre. The following crop and weed species were seeded in evenly spaced 6 inch long rows: Oat, Corn, Rice, Wheat, Foxtail, Crabgrass, Barnyardgrass, Johnsongrass, Goosegrass, Cucumber, Soybean, Peanut, Alfalfa, Cotton, Tomato, Hemp sesbania, Pigweed, Lambsquarters, Sicklepod, Prickly sida, Morningglory, Cocklebur, and Jimsonweed.

Plants were watered, observed and evaluated at weekly intervals.

Sample aqueous herbicide formulations, including comparative formulations, were prepared and applied to the plant foliage with a small hand sprayer in a volume of 25 ml/flat at 3 weeks after planting (2 to 4 leaf stage). Sample formulations E, F, H, I, J, K and L were applied at the rate of 15 lbs of active ingredient per acre whereas sample formulations C and G, which were known to possess herbicidal activity, were employed at the rate of 4 lbs of active ingredient per acre and 0.5 lb of active ingredient per acre, respectively, for purposes of comparison. Each sample formulation was also applied to actively growing vescue and crabgrass turf at substantially the same rates and evaluated at weekly intervals.

Sample formulations E and F were each formulated as an aqueous concentrate containing 20% by weight of active ingredient and .1% by weight of Triton AG-98, an agricultural, nonionic surfactant manufactured by Rohm & Haas. Sample formulations H, I, J, K and L were each formulated as an aqueous concentrate containing 20% by weight active ingredient and .5% by weight of Triton AG-98. The concentrates were diluted with water and applied at the above-identified application rates.

The results are summarized below in Tables 7 through 12.

Table 7

Effects Of Foliar Applied Sample Formulations On Plant Growth At 2 Days After Treatment

| Sample Formulation | Observations |
|---|---|
| Control ($H_2O$) | no effects. |
| E[1] | Slight necrosis of leaves of tomato, cocklebur, pigweed and jimsonweed. Chlorosis on leaf margins of cucumber. |
| F[2] | Slight inhibition of growth of cucumber, pigweed, tomato and cocklebur. Chlorosis on leaf margin of cucumber. |
| C[3] | Slight inhibition of growth of cucumber, hemp sesbania, pigweed, barnyardgrass, sicklepod, tomato and cocklebur. |
| G[4] | Severe necrosis of leaves of cucumber, sesbania, pigweed, cotton, tomato and cocklebur. Moderate necrosis of rice, foxtail, alfalfa, lambsquarters, crabgrass, wheat, barnyardgrass, sicklepod, prickly sida, johnsongrass and morningglory. |

---

1 Active ingredient: Isopropylammonium salt of glyphosate. pH=7. (Comparative).

2 Active ingredient: Isopropylammonium salt of 4-phosphonobutyric acid. pH=7.

3 C was as defined in Table 1. (Comparative).

4 Blazer, a proprietary formulation manufactured by Rohm & Haas. (Comparative). Active ingredient:

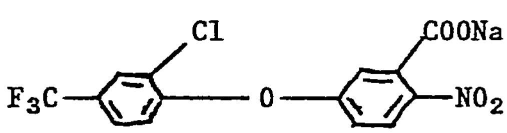 .

Table 8

Crop Injury Or Weed Control Rating At 7 Days After Treatment With Foliar Applied Sample Formulations

| Species | Sample Formulation* E | F | C | G |
|---|---|---|---|---|
| | (% of Control) | | | |
| Oat | 90 | 0 | 100 | 70 |
| Corn | 80 | 0 | 90 | 40 |
| Rice | 100 | 0 | 100 | 50 |
| Wheat | 90 | 0 | 100 | 90 |
| Foxtail | 100 | 0 | 100 | 90 |
| Crabgrass | 100 | 10 | 100 | 90 |
| Barnyardgrass | 100 | 50 | 90 | 50 |
| Johnsongrass | 100 | 50 | 100 | 100 |
| Goosegrass | 90 | 20 | 80 | 90 |
| Cucumber | 100 | 60 | 100 | 100 |
| Soybean | 100 | 20 | 100 | 0 |
| Peanut | 90 | 20 | 30 | 50 |
| Alfalfa | 100 | 0 | 100 | 100 |
| Cotton | 80 | 20 | 70 | 80 |
| Tomato | 100 | 50 | 100 | 100 |
| Hemp sesbania | 100 | 0 | 100 | 100 |
| Pigweed | 90 | 50 | 100 | 100 |
| Lambsquarters | 100 | 50 | 100 | 100 |
| Sicklepod | 90 | 20 | 90 | 70 |
| Prickly sida | 70 | 50 | 70 | 70 |
| Morningglory | 90 | 50 | 90 | 90 |
| Cocklebur | 100 | 50 | 100 | 100 |
| Jimsonweed | 100 | 50 | 100 | 100 |
| Mean | 97 | 27 | 88 | 80 |
| Range | 70-100 | 0-60 | 30-100 | 40-100 |

* Sample formulations were as defined in Table 7.

Table 9

Crop Injury Or Weed Control Rating At 14 Days After Treatment With Foliar Applied Sample Formulations

| Species | E | F | C | G |
|---|---|---|---|---|
| | Sample Forumlation* | | | |
| | (% of Control) | | | |
| Oat | 100 | 0 | 100 | 70 |
| Corn | 100 | 30 | 100 | 50 |
| Rice | 100 | 0 | 100 | 40 |
| Wheat | 100 | 40 | 100 | 40 |
| Foxtail | 100 | 30 | 100 | 100 |
| Crabgrass | 100 | 20 | 100 | 80 |
| Barnyardgrass | 100 | 30 | 100 | 70 |
| Johnsongrass | 100 | 40 | 100 | 100 |
| Goosegrass | 100 | 10 | 100 | 90 |
| Cucumber | 100 | 60 | 100 | 100 |
| Soybean | 100 | 10 | 100 | 0 |
| Peanut | 100 | 10 | 100 | 30 |
| Alfalfa | 100 | 0 | 100 | 100 |
| Cotton | 100 | 30 | 100 | 70 |
| Tomato | 100 | 70 | 100 | 100 |
| Hemp sesbania | 100 | 10 | 100 | 100 |
| Pigweed | 100 | 80 | 100 | 100 |
| Lambsquarters | 100 | 40 | 100 | 100 |
| Sicklepod | 100 | 20 | 100 | 90 |
| Prickly sida | 100 | 50 | 100 | 70 |
| Morningglory | 100 | 50 | 100 | 90 |
| Cocklebur | 100 | 50 | 100 | 100 |
| Jimsonweed | 100 | 40 | 100 | 100 |
| Mean | 100 | 31 | 100 | 77 |
| Range | 100 | 0-80 | 100 | 0-100 |

* Sample Formulations were as defined in Table 7.

Table 10

Effects Of Foliar Applied Sample Formulations On Plant Growth At 2 Days After Treatment

| Sample Formulations | Observations |
|---|---|
| Control ($H_2O$) | no effects |
| H[1] | Bleached and necrotic spots on soybean and cucumber |
| I[2] | Bleached and necrotic spots on soybean, cucumber, corn, alfalfa, morningglory. Injury more severe than 81-27. Plants wilting. |
| J[3] | Cockleburn and morningglory wilting. Terminal leaves on cocklebur are necrotic. |
| K[4] | Slight leaf burn on soybean. |
| L[5] | All plants except crabgrass are wilted and slight necrosis is apparent. |
| C[6] | Slight inhibition of growth of most plants. Necrosis apparent on many plants. |

1 Active ingredient: Methyl-4-diethylphosphonobutyrate.

2 Active ingredient: Ethyl-3-diethylphosphonobutyrate.

3 Active ingredient: Isopropylammonium salt of 3-phosphonopropionic acid. pH=7.

4 Active ingredient: Ethyl-diethylphosphonoacetate.

5 Active ingredient: Isopropylammonium salt of 2-phonphonoacetic acid. pH=7.

6 C was as defined in Table 1. (Comparative).

## Table 11

Crop injury or weed control ratings at 7 days after treatment with foliar applied sample formulations

| Species | Sample Formulation[d] H | I | J | K | L | C |
|---|---|---|---|---|---|---|
| | (% of Control) | | | | | |
| Oat | 30 | 20 | 20 | 20 | 90 | 90 |
| Corn | 10 | 0 | 0 | 0 | 50[b] | 90 |
| Rice | 0 | 0 | 0 | 0 | 90 | 100 |
| Wheat | 10 | 10 | 10[b] | 20[a] | 100 | 100 |
| Foxtail | 0 | 0 | 0 | 0 | 100 | 100 |
| Crabgrass | 10 | 0 | 20[b] | 10[a] | 70[a] | 100 |
| Barnyardgrass | 10 | 10 | 10[b] | 20[a] | 100 | 90 |
| Johnsongrass | 0 | 0 | 20 | 10 | 100 | 100 |
| Goosegrass | 0 | 0 | 10 | 30[a] | 100 | 80 |
| Cucumber | 30[a] | 30[a] | 40[b] | 10[a] | 100 | 100 |
| Soybean | 30[a] | 30[a] | 50[b] | 30[a] | 100 | 100 |
| Peanut | 0 | 10[a] | - | - | - | - |
| Alfalfa | 10 | 10 | 0 | 0 | 100 | 100 |
| Cotton | 10[a] | 20[a] | 20[a] | 20[a] | 90 | 80 |
| Tomato | 20[a] | 20[a] | 50[b] | 0 | 100 | 100 |
| Hemp sesbania | 0 | 0 | 10[b] | 10[a] | 100 | 100 |
| Pigweed | 10 | 10 | 10[b] | 10[a] | 100 | 100 |
| Lambsquarters | 10 | 10 | 20 | 10 | 100 | 100 |
| Sicklepod | 10 | 10 | 30[b] | 20[a] | 100 | 90 |
| Prickly sida | 30[a] | 40[a] | 100 | 70[a] | 100 | 90 |
| Morningglory | 10 | 30[a] | 50[b] | 10[c] | 90[a] | 90 |
| Cocklebur | 10 | 20[c] | 50[b] | 20[a] | 100 | 100 |
| Jimsonweed | 10 | 0 | 10 | 0 | 100 | 100 |
| Mean | 11 | 12 | 25 | 15 | 95 | 95 |
| Range | 0-30 | 0-40 | 0-100 | 0-70 | 50-100 | 80-100 |

a Necrosis of leaf margins.

b Interveinal chlorosis of leaves.

c Malformed terminal bud and leaves.

d Sample formulations were as defined in Table 10.

Table 12

Crop injury or weed control ratings at 14 days after treatment with foliar applied sample formulations

| Species | Sample Formulations[c] H | I | J | K | L | C |
|---|---|---|---|---|---|---|
| | (% of Control) | | | | | |
| Oat | 0 | 0 | 10 | 10 | 100 | 100 |
| Corn | 0 | 0 | 0 | 10 | 70[b] | 100 |
| Rice | 0 | 0 | 0 | 0 | 90 | 100 |
| Wheat | 0 | 0 | 10 | 10 | 100 | 100 |
| Foxtail | 0 | 0 | 0 | 0 | 100 | 100 |
| Crabgrass | 0 | 0 | 20 | 0 | 70 | 100 |
| Barnyardgrass | 0 | 0 | 10 | 10 | 100 | 100 |
| Johnsongrass | 0 | 0 | 20[b] | 0 | 100 | 100 |
| Goosegrass | 0 | 0 | 0 | 10[a] | 100 | 100 |
| Cucumber | 10[a] | 10[a] | 70[b] | 10[a] | 100 | 100 |
| Soybean | 30[a] | 20[a] | 50[b] | 10[a] | 100 | 100 |
| Peanut | 20 | 10 | - | - | - | - |
| Alfalfa | 0 | 0 | 10 | 0 | 100 | 100 |
| Cotton | 10[a] | 20[a] | 10[a] | 10[a] | 90 | 100 |
| Tomato | 10[a] | 20[a] | 70[b] | 0 | 100 | 100 |
| Hemp sesbania | 0 | 0 | 0 | 0 | 100 | 100 |
| Pigweed | 0 | 0 | 50 | 0 | 100 | 100 |
| Lambsquarters | 0 | 0 | 50 | 0 | 100 | 100 |
| Sicklepod | 0 | 10 | 20[b] | 0 | 100 | 100 |
| Prickly sida | 20[a] | 30[a] | 100 | 20[a] | 100 | 100 |
| Morningglory | 10[a] | 10[a] | 50[b] | 10 | 90 | 100 |
| Cocklebur | 0 | 10[a] | 60[b] | 20 | 100 | 100 |
| Jimsonweed | 0 | 0 | 10 | 20 | 100 | 100 |
| Mean | 5 | 6 | 27 | 7 | 96 | 100 |
| Range | 0-30 | 0-30 | 0-100 | 0-20 | 70-100 | 100 |
| Fescue turf | 0 | 0 | 0 | 0 | 70 | 90 |

a Necrosis of leaf margins.

b Interveinal Chlorosis of leaves.

c Sample formulations were as defined in Table 10.

The compounds useful in the compositions and method of the present invention have been evaluated for herbicidal activity but, depending on concentration and rate of application, it is contemplated that these compounds and their compositions will also find utility as plant growth regulators.

The liquid herbicidal compositions of this invention, including concentrates which require dilution prior to application to the plants, typically contain from about 2 to about 98 parts by weight of at least one active ingredient of this invention, that is, a phosphonoalkanoic acid or ester or salt thereof, and from 0 to about 50 parts by weight, preferably 0 to about 25 parts by weight, and more preferably 0 to about 5 parts by weight of an inert adjuvant in liquid or solid form, for example, a wetting agent, emulsifying agent, dispersant or any combination thereof, and from about 4.5 to about 94.5 parts by weight of inert liquid extender, e.g., water, all parts being by weight of the total composition. Where required, from about 0.1 to about 2 parts by weight of the inert liquid extender can be replaced by a corrosion inhibitor or anti-foaming agent, or both. Lower or higher levels of active ingredient and adjuvant can, of course, be present depending on the intended use and the physical properties of the compound.

Water-dispersible powder compositions can be made containing one or more active ingredients, an inert solid extender and an inert adjuvant, for example, one or more wetting and dispersing agents. The inert solid extenders are typically of mineral origin such as the natural clays, diatomaceous earth and synthetic minerals derived from silica and the like. Examples of such extenders include kaolinites, attapulgite clay and synthetic magnesium silicate. The water-dispersible powders of this invention typically contain from about 2 to about 98 parts by weight of at least one active ingredient of this invention, from 0 to about 25 parts, preferably 0 to about 5 parts, by weight of wetting agent, from about 0.25 to about 25 parts

by weight of dispersant and from about 4.5 to about 94.5 parts by weight of inert solid extender, all parts being by weight of the total composition. Where required, from about 0.1 to about 2 parts by weight of the solid inert extender can be replaced by a corrosion inhibitor or anti-foaming agent or both.

Aqueous suspensions can be prepared by mixing together and grinding an aqueous slurry of a water-insoluble active ingredient of this invention in the presence of dispersing agents (adjuvants) to obtain a concentrated slurry of very finely-divided particles. The resulting concentrated aqueous suspension is characterized by its extremely small particle size, so that when diluted with an inert liquid extender and sprayed, coverage is very uniform.

Emulsifiable oils are typically solutions of active ingredient in water-immiscible or partially water-immiscible solvents together with an inert adjuvant which is typically a surface-active agent. Suitable solvents for the active ingredient of this invention include hydrocarbons and water-immiscible ethers, esters or ketones. Emulsifiable oil compositions typically contain from about 2 to about 98 parts active ingredient, about 1 to about 50 parts surface active agent and about 4 to about 94 parts solvent, all parts being by weight based on the total weight of emulsifiable oil.

The herbicidal compositions of this invention, particularly the liquids and soluble powders, preferably contain as an inert adjuvant, one or more surface-active agents in amounts sufficient to render a given composition readily dispersible in water or in oil. The incorporation of a surface-active agent into the compositions greatly enhances their efficacy. By the term "surface-active agent" it is understood that wetting agents, dispersing agents, suspending agents and emulsifying agents are included therein. Anionic, cationic and nonionic agents can be used with equal facility. It has been observed by those skilled in the art that increased degrees of penetration of the plant leaves are experienced with increasing concentrations of surfactant in the compositions and thus higher ratios of surfactant to active ingredient are sometimes desirable, and are achieved by incorporation into the formulation or by tank mixing.

Preferred wetting agents are alkyl benzene and alkyl naphthalene sulfonates, sulfated fatty alcohols, amines or acid amides, long chain acid esters of sodium isothionate, esters of sodium sulfosuccinate, sulfated or sufonated fatty acid esters, petroleum sulfonates, sulfonated vegetable oils, polyoxyethylene derivatives of phenols and alkylphenols (particularly isooctylphenol and nonylphenol) and polyoxyethylene derivatives of the non-higher fatty acid esters of hexitol anhydrides (e.g., sorbitan). Preferred dispersants are methyl cellulose, polyvinyl alcohol, sodium lignin sulfonates, polymeric alkyl naphthalene sulfonates, sodium naphthalene sulfonate, polymethylene bisnaphthalenesulfonate and sodium N-methyl-N-(long chain acyl) taurates.

Typical solid diluents are described in Watkins, et al., "Handbook of Insecticide Dust Diluents and Carriers", 2nd Ed., Dorland Books, Caldwell, N.Y. The denser diluents are preferred to dust. Typical liquid diluents and solvents are described in Marsden, "Solvents Guide", 2nd Edn., Interscience, New York 1950. Solution concentrates are preferably stable against phase separation at 0°C. "McCutcheon's Detergents and Emulsifiers Annual", Allured Publ. Corp., Ridegwood, N.J., as well as Sisely and Wood, "Encyclopedia of Surface Active Agents", Chemical Publ. Co., Inc. New York, 1964, list surfactants and recommended uses.

The compositions are prepared by admixing the active ingredient with an adjuvant including diluents, extenders, carriers and conditioning agents to provide compositions in the form of finely-divided particulate solids, pellets, solutions, dispersions or emulsions. From the viewpoint of economy and convenience, water is the preferred diluent. All formulations can contain minor

amounts of additives to reduce foam, caking, corrosion, microbiological growth, and the like. Granules and pellets may be made by spraying the active material upon preformed granulacarriers or by agglomeration techniques. See J. E. Browning, "Agglomeration", Chemical Engineering, Dec. 4, 1967, pp. 147-170, and "Perry's Chemical Engineer's Handbook", 4th Edn., McGraw-Hill, N.Y., 1963, pp. 8-59 through 8-61.

For further information regarding the art of formulation, see for example: G. C. Klingman, "Weed Control as a Science", John Wiley & Sons, Inc., New York, 1961, pp. 81-96; J. D. Fryer and S. A. Evans, "Weed Control Handbook", 5th Edn. Blackwell Scientific Publications, Oxford, 1968, pp. 101-103.

Although compositions of this invention can also contain other additaments, for example, fertilizers, phytotoxicants and plant growth regulants, pesticides and the like used as adjuvants or in combination with any of the above-described adjuvants, it is preferred to employ the compositions of this invention alone with sequential treatments with the phytotoxicants, fertilizers and the like for maximum effect. For example, the field could be sprayed with a composition of this invention either before or after being treated with fertilizers, phytotoxicants and the like. The compositions of this invention can also be admixed with the other materials, e.g., fertilizers, phytotoxicants, and the like, and applied in a single application. Chemicals useful either simultaneously or sequentially in combination with the active ingredients of this invention include, for example, triazines, ureas, carbamates, acetamides, acetanilides, uracils, phenols, thiolcarbamates, triazoles, benzoic acids, nitriles and the like.

Fertilizers useful in combination with the active ingredients include, for example, ammonium nitrate, urea, potash, and superphosphate.

In accordance with the method of the present invention, effective amounts of the compounds of the present invention are applied to above-ground portions of plants. The application of liquid and particulate solid herbicidal compositions to above-ground portions of plants can be carried out by conventional methods, e.g., rope wicks, power dusters, boom and hand sprayers and spray dusters.

The term "plant" as used herein means terrestrial plants. The term "terrestrial plant" is inclusive of germinating seeds, emerging seedlings and herbaceous vegetation including the roots and above-ground portions, as well as established woody plants.

The application of an effective amount of the compounds of this invention to the plant is essential and critical for the practice of the present invention. The exact amount of active ingredient to be employed is dependent upon the response desired in the plant as well as such other factors as the plant species and stage of development thereof, and the amount of rainfall as well as the specific compound employed. In foliar treatment for the control of vegetative growth, the active ingredients are applied in amounts from about 1 to about 50 or more pounds per acre, preferably about 2 to about 30 pounds per acre. An effective amount for herbicidal control is that amount necessary for overall or selective control, i.e., a herbicidal amount. It is believed that one skilled in the art can readily determine from the teachings of this specification, including examples, the approximate application rate.

Although the invention is described with respect to specific embodiments the details thereof are not to be construed as limitations except to the extent indicated in the following claims.

CLAIMS:

1. A herbidical composition comprising an inert adjuvant and a herbicidally effective amount of a compound of the formula

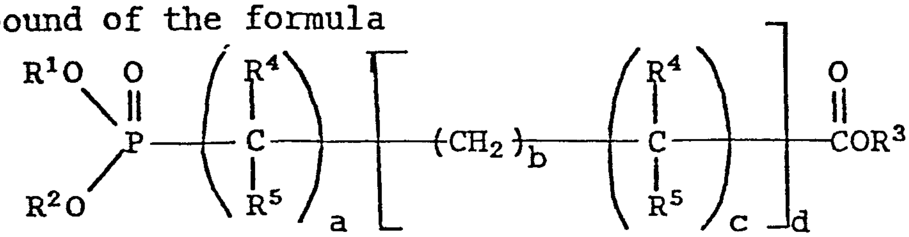

wherein $R^1$, $R^2$ and $R^3$ are each selected independently from H, lower alkyl, substituted lower alkyl, aryl, substituted aryl, ammonium, mono-, di- and tri- lower alkylammonium, arylammonium, and alkali metal and alkaline earth metal cations; and for each $>CR^4R^5$ group, $R^4$ is selected independently from H, lower alkyl, substituted lower alkyl, aryl, substituted aryl, halogen, mono- and di- lower alkylamino, amino, lower alkoxy, and hydroxy, and $R^5$ is H, or $R^5$ is selected independently from H, lower alkyl, substituted lower alkyl and halogen, when $R^4$ is lower alkyl, substituted lower alkyl or halogen; and a, b, c and d are each selected independently from 0, 1, 2, 3, 4, 5, 6 and 7, provided that: $1 \leqq a + d(b + c) \leqq 7$.

2. A herbicidal composition of claim 1 wherein: $1 \leqq a + d(b + c) \leqq 4$.

3. A herbicidal composition of claim 1 wherein $a = 1$ and $d = 0$.

4. A herbicidal composition of claim 3 wherein $R^4$ is H, methyl or fluorine and $R^5$ is H or fluorine.

5. A herbicidal composition of any preceding claim wherein $R^3$ and at least one of $R^1$ and $R^2$ is isopropylammonium.

6. A herbicidal composition of claim 1, 2, or 3 wherein $R^1 = R^2 = R^3 = H$.

7. A herbicidal composition of claim 6 wherein $R^4 = R^5 = H$.

8. A herbicidal composition of claim 1 or 2 wherein $R^1 = R^2 =$ aryl and $R^3$ is H or lower alkyl.

9. A herbicidal method comprising contacting a plant with a herbicidally effective amount of a compound of the formula

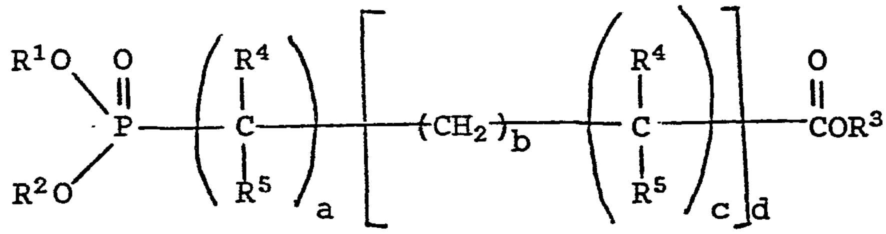

wherein $R^1$, $R^2$ and $R^3$ are each selected independently from H, lower alkyl, substituted lower alkyl, aryl, substituted aryl, ammonium, mono-, di- and tri- lower alkylammonium, arylammonium, and alkali metal and alkaline earth metal cations; and for each $>CR^4R^5$ group, $R^4$ is selected from H, lower alkyl, substituted lower alkyl, aryl, substituted aryl, halogen, mono- and di- lower alkylamino, amino, lower alkoxy, and hydroxy, and $R^5$ is H, or $R^5$ is selected independently from H, lower alkyl, substituted lower alkyl and halogen, when $R^4$ is lower alkyl, substituted lower alkyl or halogen; and a, b, c and d are each selected independently from 0, 1, 2, 3, 4, 5, 6 and 7, provided that $1 \leqq a + d\ (b + c)$ is $\leqq 7$.

10. The herbicidal method of claim 9 wherein: $1 \leqq a + d(b + c) \leqq 4$.

11. The herbicidal method of claim 9 wherein $a = 1$ and $d = 0$.

12. The herbicidal method of claim 11 wherein $R^4$ is H, methyl or fluorine and $R^5$ is H or fluorine.

13. The herbicidal method of claim 9, 10 or 11 wherein $R^3$ and at least one of $R^1$ and $R^2$ is isopropylammonium

14. The herbicidal method of claim 9, 10 or 11 wherein $R^1 = R^2 = R^3 = H$.

15. The herbicidal method of claim 14 wherein $R^4 = R^5 = H$.

16. The herbicidal method of claim 9 or 10 wherein $R^1 = R^2 =$ phenyl and $R^3$ is H or lower alkyl.

European Patent Office

# EUROPEAN SEARCH REPORT

0080889
Application number

EP 82 30 6345

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 001 018 (E.I. DU PONT DE NEMOURS) *Complete specification* --- | 1-16 | A 01 N 57/18<br>C 07 F 9/40<br>C 07 F 9/38 |
| X | FR-A-2 184 903 (MERCK & CO.) *Complete specification* --- | 1-16 | |
| Y | FR-A-2 351 598 (HOECHST AG) *Complete specification* --- | 1-16 | |
| X | CENTRAL PATENTS INDEX - BASIC ABSTRACTS JOURNAL, Section C: AGDOC, Derwent Publications Ltd., 1979, Week B34, 17th October 1979, no. 62501B/34, London (GB); & JP - B - 54 089 027 (NISSAN CHEMICAL INDUSTRIES K.K.) (27-12-1977) *Abstract* --- | 1-16 | TECHNICAL FIELDS SEARCHED (Int. Cl. 3) |
| Y | FR-A-1 555 173 (AMCHEM PRODUCTS, INC.) *Page 1, column 2, last paragraph; page 18, abstract A.1* --- | 1-16 | A 01 S 7/00<br>C 07 F 9/00 |
| Y | FR-A-1 066 923 (CIBA) *Complete specification* --- | 1-16 | |
| Y | LU-A- 33 001 (J.R.GEIGY) *Complete specification* --- -/- | 1-16 | |

The present search report has been drawn up for all claims

| Place of search | Date of completion of the search | Examiner |
|---|---|---|
| THE HAGUE | 28-02-1983 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

0080889

Application number

EP 82 30 6345



## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | SOVIET INVENTIONS ILLUSTRATED, Section CH: Chemical, Derwent Publications Ltd., Week Y22, 12th July 1977, Agricultural Chemistry, page 2, no. 39337Y/22, London (GB); & SU - A - 515 755 (PHYTOPATH. RES. INST.) (30-08-1974) *Abstract* ----- | 1-16 | |
| | | | TECHNICAL FIELDS SEARCHED (Int. Cl. 3) |

The present search report has been drawn up for all claims

| Place of search | Date of completion of the search | Examiner |
|---|---|---|
| THE HAGUE | 28-02-1983 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82